# EUROPEAN PATENT APPLICATION

(11) **EP 4 572 215 A1**
(43) Date of publication of application: **18.06.2025**
(21) Application number: 23862145.2
(22) Date of filing: 14.08.2023
(51) Int. Cl.: H04L 5/00

(54) **HANDOVER METHOD AND COMMUNICATION APPARATUS**

(30) Priority: 05.09.2022 CN 202211078888
(71) Applicant: Huawei Technologies Co., Ltd., Shenzhen, Guangdong 518129 (CN)
(72) Inventor: WANG, Yu, Shenzhen, Guangdong 518129 (CN); LUO, Hejia, Shenzhen, Guangdong 518129 (CN); QIAO, Yunfei, Shenzhen, Guangdong 518129 (CN); KONG, Chuili, Shenzhen, Guangdong 518129 (CN); WANG, Jun, Shenzhen, Guangdong 518129 (CN); LI, Rong, Shenzhen, Guangdong 518129 (CN)
(74) Representative: Goddar, Heinz J.
(86) International application number: PCT/CN2023/112900
(87) International publication number: WO 2024/051448

(57) **Abstract**

This application provides a handover method and a communication apparatus, and relates to the field of communication technologies. The method includes: A terminal device obtains first configuration information of a transmission resource for a first-type downlink reference signal. The terminal device obtains configuration information of a transmission resource for a second-type downlink reference signal. The transmission resource for the first-type downlink reference signal is different from the transmission resource for the second-type downlink reference signal, the first-type downlink reference signal is used for cell handover, and the second-type downlink reference signal is used for random access. The terminal device detects the first-type downlink reference signal based on the first configuration information, to obtain a first detection result. The terminal device determines, based on the first detection result, whether to perform cell handover. This application can improve handover efficiency and a handover success rate.

## Description

### CROSS-REFERENCE TO RELATED APPLICATIONS

This application claims priority to Chinese Patent Application No. 202211078888.1, filed with the China National Intellectual Property Administration on September 5, 2022 and entitled "HANDOVER METHOD AND COMMUNICATION APPARATUS", which is incorporated herein by reference in its entirety.

### TECHNICAL FIELD

Embodiments of this application relate to the field of communication technologies, and in particular, to a handover method and a communication apparatus.

### BACKGROUND

With development of satellite networks, an overall trend of the satellite networks is toward ultra-dense and heterogeneous. A scale of the satellite networks has increased from 66 Iridium constellations to 720 OneWeb constellations, and finally exceeds 12,000 Starlink (Starlink) ultra-dense low earth orbit (low earth orbit, LEO) satellite constellations. As for the heterogeneous feature, satellite networks have evolved from a conventional single-layer communication network to a multi-layer communication network. Functions of the communication satellite networks are becoming more complex and diversified, and are gradually compatible with and support navigation enhancement, ground observation, multi-dimensional information in-orbit processing, and other functions.

In a beam hopping satellite system, a satellite performs time-division area coverage in a beam hopping manner. Movement of the satellite triggers group handover of terminal devices in an area (that is, a plurality of terminal devices in the area almost simultaneously initiate handover). However, current cell handover is designed for handover triggered by movement of a terminal device, and is not applicable to group handover resulting from the movement of a satellite.

### SUMMARY

Embodiments of this application provide a handover method and a communication apparatus, to design cell handover dedicated to group handover caused by movement of a satellite, so that handover efficiency and a handover success rate can be improved.

According to a first aspect, an embodiment of this application provides a handover method, including: A terminal device obtains first configuration information of a transmission resource for a first-type downlink reference signal; the terminal device obtains configuration information of a transmission resource for a second-type downlink reference signal, where the transmission resource for the first-type downlink reference signal is different from the transmission resource for the second-type downlink reference signal, the first-type downlink reference signal is used for cell handover, and the second-type downlink reference signal is used for random access; the terminal device detects the first-type downlink reference signal based on the first configuration information, to obtain a first detection result; and the terminal device determines, based on the first detection result, whether to perform cell handover.

In the foregoing design, in consideration of terminal device group handover caused by movement of a satellite, a transmission resource for a downlink reference signal dedicated to cell handover is configured, so that handover efficiency and a handover success rate can be improved.

In a possible implementation, that the transmission resource for the first-type downlink reference signal is different from the transmission resource for the second-type downlink reference signal includes one or more of the following: A time domain resource occupied by the first-type downlink reference signal is different from a time domain resource occupied by the second-type downlink reference signal; a transmission periodicity of the first-type downlink reference signal is different from a transmission periodicity of the second-type downlink reference signal; a sequence corresponding to the first-type downlink reference signal is different from a sequence corresponding to the second-type downlink reference signal; a polarization manner corresponding to the first-type downlink reference signal is different from a polarization manner corresponding to the second-type downlink reference signal; a frequency domain resource occupied by the first-type downlink reference signal is different from a frequency domain resource occupied by the second-type downlink reference signal; a beam corresponding to the first-type downlink reference signal is different from a beam corresponding to the second-type downlink reference signal; a receive window corresponding to the first-type downlink reference signal is different from a receive window corresponding to the second-type downlink reference signal; or the first-type downlink reference signal is used in a neighboring service area of a first satellite at a first moment, and the second-type downlink reference signal is used in a service area of the first satellite at the first moment.

This design helps the terminal device quickly determine to perform cell handover or random access, so that communication performance can be improved.

In a possible design, the transmission resource for the first-type downlink reference signal includes one or more of the following: the time domain resource occupied by the first-type downlink reference signal, the transmission periodicity of the first-type downlink reference signal, the sequence corresponding to the first-type downlink reference signal, the polarization manner corresponding to the first-type downlink reference signal, the frequency domain resource corresponding to the first-type downlink reference signal, the beam corresponding to the first-type downlink reference signal, the receive window corresponding to the first-type downlink reference signal, and the neighboring service area of the first satellite at the first moment. This design can assist the terminal device in performing signal measurement in a cell handover process, thereby improving handover efficiency.

In a possible design, the first-type downlink reference signal includes a plurality of downlink reference signals, and the plurality of downlink reference signals occupy different transmission resources in transmission resources for the first-type downlink reference signal.

In a possible design, the transmission periodicity of the first-type downlink reference signal is related to a movement status of the first satellite. A transmission periodicity of a signal in cell handover is configured based on movement of a satellite, so that a success rate of terminal device group handover caused by the movement of the satellite can be improved.

In a possible design, the terminal device may further obtain second configuration information of the transmission resource for the first-type downlink reference signal; the terminal device detects the first-type downlink reference signal based on the second configuration information, to obtain a second detection result; and the terminal device determines, based on the second detection result, whether to perform cell handover. This design considers movement of a satellite, and dynamically configures or updates a transmission resource for a signal used for cell handover, so that a success rate of terminal device group handover caused by the movement of the satellite can be improved.

In a possible design, the second configuration information is used to determine a neighboring service area of the first satellite at a second moment, and the second configuration information includes one or more of the following: an offset between the neighboring service area of the first satellite at the second moment and the neighboring service area of the first satellite at the first moment; an offset between a service area of the first satellite at the second moment and the service area of the first satellite at the first moment; an identifier of a first-type area, where the first-type area is included in the neighboring service area of the first satellite at the first moment, and the first-type area is not included in the neighboring service area of the first satellite at the second moment; an identifier of a second-type area, where the second-type area is not included in the neighboring service area of the first satellite at the first moment, and the second-type area is included in the neighboring service area of the first satellite at the second moment; and an offset between the neighboring service area of the first satellite at the second moment and the service area of the first satellite at the second moment. This design assists the terminal device in determining, with reference to a historical configuration and an updated configuration, a transmission resource for a signal used for cell handover, so that signaling overheads of the updated configuration can be reduced.

In a possible design, the first-type downlink reference signal is associated with a first access resource of the terminal device in cell handover, and the first access resource is different from a random access resource associated with the second-type downlink reference signal. An access resource used for terminal device group handover is designed, so that a success rate of the terminal device group handover can be improved.

In a possible design, after the determining to perform cell handover, the method further includes: The terminal device determines a camping cell based on the first detection result, and detects the second-type downlink reference signal; and the terminal device accesses a target cell based on the random access resource associated with the second-type downlink reference signal.

In a possible design, after the determining to perform cell handover, the method further includes: The terminal device determines a target cell based on the first detection result; and the terminal device re-accesses the target cell based on the first access resource associated with the first-type downlink reference signal.

According to a second aspect, an embodiment of this application provides a handover method, including: A network device determines first configuration information of a transmission resource for a first-type downlink reference signal; the network device sends the first configuration information of the transmission resource for the first-type downlink reference signal; and the network device sends configuration information of a transmission resource for a second-type downlink reference signal, where the transmission resource for the first-type downlink reference signal is different from the transmission resource for the second-type downlink reference signal, the first-type downlink reference signal is used for cell handover, and the second-type downlink reference signal is used for random access.

In a possible design, the network device sends the first-type downlink reference signal based on the first configuration information of the transmission resource for the first-type downlink reference signal.

For a definition of a difference between the transmission resource for the first-type downlink reference signal and the transmission resource for the second-type downlink reference signal, a definition of the transmission resource for the first-type downlink reference signal, and a definition of the first-type downlink reference signal, refer to descriptions in the first aspect for understanding. Details are not described in this embodiment of this application.

In a possible design, a transmission periodicity of the first-type downlink reference signal is related to a movement status of a first satellite.

In a possible design, the network device may further send second configuration information of the transmission resource for the first-type downlink reference signal.

For a definition of the second configuration information, refer to descriptions in the first aspect for understanding. Details are not described in this embodiment of this application.

For a definition of a first access resource associated with the first-type downlink reference signal, refer to descriptions in the first aspect for understanding. Details are not described in this embodiment of this application.

According to a third aspect, an embodiment of this application provides a communication apparatus. The communication apparatus may be a terminal device, may be an apparatus, a module, a chip, or the like in a terminal device, or may be an apparatus that can be used together with a terminal device. In a design, the communication apparatus may include modules that one-to-one correspond to methods/operations/steps/actions described in the first aspect. The modules may be implemented by a hardware circuit, software, or a combination of a hardware circuit and software. In a design, the communication apparatus may include a processing module and a communication module.

The communication module is configured to: obtain first configuration information of a transmission resource for a first-type downlink reference signal, and obtain configuration information of a transmission resource for a second-type downlink reference signal, where the transmission resource for the first-type downlink reference signal is different from the transmission resource for the second-type downlink reference signal, the first-type downlink reference signal is used for cell handover, and the second-type downlink reference signal is used for random access.

The processing module is configured to: detect the first-type downlink reference signal based on the first configuration information to obtain a first detection result, and determine, based on the first detection result, whether to perform cell handover.

For a definition of a difference between the transmission resource for the first-type downlink reference signal and the transmission resource for the second-type downlink reference signal, a definition of the transmission resource for the first-type downlink reference signal, and a definition of the first-type downlink reference signal, refer to descriptions in the first aspect for understanding. Details are not described in this embodiment of this application.

In a possible design, a transmission periodicity of the first-type downlink reference signal is related to a movement status of a first satellite.

In a possible design, the communication module is further configured to obtain second configuration information of the transmission resource for the first-type downlink reference signal; and the processing module is further configured to: detect the first-type downlink reference signal based on the second configuration information, to obtain a second detection result; and determine, based on the second detection result, whether to perform cell handover.

For a definition of the second configuration information, refer to descriptions in the first aspect for understanding. Details are not described in this embodiment of this application.

For a definition of a first access resource associated with the first-type downlink reference signal, refer to descriptions in the first aspect for understanding. Details are not described in this embodiment of this application.

In a possible design, the processing module is further configured to: after determining to perform cell handover, determine a camping cell based on the first detection result, and detect the second-type downlink reference signal; and access a target cell based on a random access resource associated with the second-type downlink reference signal.

In a possible design, the processing module is further configured to: after determining to perform cell handover, determine a target cell based on the first detection result; and re-accesses the target cell based on the first access resource associated with the first-type downlink reference signal.

According to a fourth aspect, an embodiment of this application provides a communication apparatus. The communication apparatus may be a network device, an apparatus, a module, a chip, or the like in a network device, or an apparatus that can be used together with a network device. In a design, the communication apparatus may include modules that one-to-one correspond to methods/operations/steps/actions described in the second aspect. The modules may be implemented by a hardware circuit, software, or a combination of a hardware circuit and software. In a design, the communication apparatus may include a processing module and a communication module.

The processing module is configured to determine first configuration information of a transmission resource for a first-type downlink reference signal.

The communication module is configured to send the first configuration information of the transmission resource for the first-type downlink reference signal.

The communication module is further configured to send configuration information of a transmission resource for a second-type downlink reference signal, where the transmission resource for the first-type downlink reference signal is different from the transmission resource for the second-type downlink reference signal, the first-type downlink reference signal is used for cell handover, and the second-type downlink reference signal is used for random access.

In a possible design, the processing module is further configured to send the first-type downlink reference signal based on the first configuration information of the transmission resource for the first-type downlink reference signal by using the communication module.

For a definition of a difference between the transmission resource for the first-type downlink reference signal and the transmission resource for the second-type downlink reference signal, a definition of the transmission resource for the first-type downlink reference signal, and a definition of the first-type downlink reference signal, refer to descriptions in the first aspect for understanding. Details are not described in this embodiment of this application.

In a possible design, a transmission periodicity of the first-type downlink reference signal is related to a movement status of a first satellite.

In a possible design, the communication module is further configured to send second configuration information of the transmission resource for the first-type downlink reference signal.

For a definition of the second configuration information, refer to descriptions in the first aspect for understanding. Details are not described in this embodiment of this application.

For a definition of a first access resource associated with the first-type downlink reference signal, refer to descriptions in the first aspect for understanding. Details are not described in this embodiment of this application.

According to a fifth aspect, an embodiment of this application provides a communication apparatus. The communication apparatus includes a processor, configured to implement the method described in the first aspect. The processor is coupled to a memory, the memory is configured to store instructions and data, and when the processor executes the instructions stored in the memory, the method described in the first aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

In a possible device, the communication apparatus includes:
the memory, configured to store the instructions;
the communication interface, configured to: obtain first configuration information of a transmission resource for a first-type downlink reference signal, and obtain configuration information of a transmission resource for a second-type downlink reference signal, where the transmission resource for the first-type downlink reference signal is different from the transmission resource for the second-type downlink reference signal, the first-type downlink reference signal is used for cell handover, and the second-type downlink reference signal is used for random access; and
the processor, configured to: detect the first-type downlink reference signal based on the first configuration information to obtain a first detection result, and determine, based on the first detection result, whether to perform cell handover.

According to a sixth aspect, an embodiment of this application provides a communication apparatus. The communication apparatus includes a processor, configured to implement the method described in the first aspect. The processor is coupled to a memory, the memory is configured to store instructions and data, and when the processor executes the instructions stored in the memory, the method described in the first aspect may be implemented. Optionally, the communication apparatus may further include the memory. The communication apparatus may further include a communication interface, and the communication interface is used by the apparatus to communicate with another device. For example, the communication interface may be a transceiver, a circuit, a bus, a module, a pin, or another type of communication interface.

**In** a possible device, the communication apparatus includes:
the memory, configured to store the instructions;
the processor, configured to determine first configuration information of a transmission resource for a first-type downlink reference signal; and
the communication interface, configured to send the first configuration information of the transmission resource for the first-type downlink reference signal.

The communication interface is further configured to send configuration information of a transmission resource for a second-type downlink reference signal, where the transmission resource for the first-type downlink reference signal is different from the transmission resource for the second-type downlink reference signal, the first-type downlink reference signal is used for cell handover, and the second-type downlink reference signal is used for random access.

According to a seventh aspect, this disclosure provides a communication system, including the communication apparatus described in the third aspect or the fifth aspect and the communication apparatus described in the fourth aspect or the sixth aspect.

According to an eighth aspect, this disclosure further provides a computer program. When the computer program is run on a computer, the computer is enabled to perform the method provided in the first aspect or the second aspect.

According to a ninth aspect, this disclosure further provides a computer program product, including instructions. When the instructions are run on a computer, the computer is enabled to perform the method provided in the first aspect or the second aspect.

According to a tenth aspect, this disclosure further provides a computer-readable storage medium. The computer-readable storage medium stores a computer program or instructions, and when the computer program or the instructions are run on a computer, the computer is enabled to perform the method provided in the first aspect or the second aspect.

According to an eleventh aspect, this disclosure further provides a chip. The chip is configured to read a computer program stored in a memory, to perform the method provided in the first aspect or the second aspect, or the chip includes a circuit configured to perform the method provided in the first aspect or the second aspect.

According to a twelfth aspect, this disclosure further provides a chip system. The chip system includes a processor, configured to support an apparatus in implementing the method provided in the first aspect or the second aspect. In a possible design, the chip system further includes a memory, and the memory is configured to store a program and data that are necessary for the apparatus. The chip system may include a chip, or may include a chip and another discrete component.

For effects of the solution provided in any one of the second aspect to the twelfth aspect, refer to corresponding descriptions in the first aspect.

### BRIEF DESCRIPTION OF DRAWINGS

FIG. 1 is a diagram of an architecture of a terrestrial network communication system according to an embodiment of this application;
FIG. 2 is a diagram of an architecture of an NTN communication system according to an embodiment of this application;
FIG. 3 is a diagram of an architecture of a 5G satellite communication system according to an embodiment of this application;
FIG. 4 is a diagram of an architecture of a satellite communication system according to an embodiment of this application;
FIG. 5 is a diagram of a beam hopping communication process according to an embodiment of this application;
FIG. 6 is a diagram of initiating terminal device group handover in beam hopping communication according to an embodiment of this application;
FIG. 7 is a schematic flowchart of a handover method according to an embodiment of this application;
FIG. 8 is one of diagrams of a mapping relationship between an SSB and an area according to an embodiment of this application;
FIG. 9 is one of diagrams of a mapping relationship between an SSB and an area according to an embodiment of this application;
FIG. 10 is a diagram of a random access resource configuration according to an embodiment of this application;
FIG. 11 is a schematic flowchart of updating a transmission resource according to an embodiment of this application;
FIG. 12 is a diagram of an area change caused by movement of a satellite according to an embodiment of this application;
FIG. 13 is one of diagrams of a structure of a communication apparatus according to an embodiment of this application; and
FIG. 14 is one of diagrams of a structure of a communication apparatus according to an embodiment of this application.

### DESCRIPTION OF EMBODIMENTS

To make objectives, technical solutions, and advantages of embodiments of this application clearer, the following further describes embodiments of this application in detail with reference to accompanying drawings.

In embodiments of this application, for example, at least one (item) in the following indicates one (item) or more (items). "A plurality of (items) "means two (items) or more than two (items). "And/or" describes an association relationship between associated objects, and indicates that three relationships may exist. For example, A and/or B may indicate that only A exists, both A and B exist, and only B exists. The character "/" generally indicates an "or" relationship between associated objects. In addition, it should be understood that although terms such as "first" and "second" may be used in embodiments of this application to describe objects, these objects should not be limited by these terms. These terms are merely used to distinguish the objects from each other.

In embodiments of this application, terms "include", "have", and any other variant thereof mentioned in the following descriptions are intended to cover non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" represents giving an example, an illustration, or a description. Any method or design scheme described as an "example" or "for example" in embodiments of this application should not be explained as being more preferred or having more advantages than another method or design scheme. Exactly, use of the word "example", "for example", or the like is intended to present a related concept in a specific manner.

Technologies provided in embodiments of this application may be applied to various communication systems, for example, a non-terrestrial network (non-terrestrial network, NTN) system such as a satellite communication system, a high-altitude platform station (high altitude platform station, HAPS) communication system, and a drone, an integrated communication and navigation (integrated communication and navigation, IcaN) system, a global navigation satellite system (global navigation satellite system, GNSS), and an ultra-dense low-orbit satellite communication system. The communication system to which embodiments of this application are applied may be integrated with a terrestrial communication system. For example, the terrestrial communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th generation, 5G) communication system (for example, a new radio (new radio, NR) system), and a future mobile communication system such as a 6G communication system.

A network element in the communication system may send a signal to another network element or receive a signal from the another network element. The signal may include information, signaling, data, or the like. The network element may alternatively be replaced with an entity, a network entity, a device, a communication device, a communication module, a node, a communication node, or the like. In embodiments of this application, a network element is used as an example for description.

For example, the terrestrial communication system may include at least one terminal device and at least one network device. The network device may send a downlink signal to the terminal device, and/or the terminal device may send an uplink signal to the network device. In addition, it may be understood that if the communication system includes a plurality of terminal devices, the plurality of terminal devices may also send signals to each other. That is, both a network element that sends a signal and a network element that receives a signal may be terminal devices.

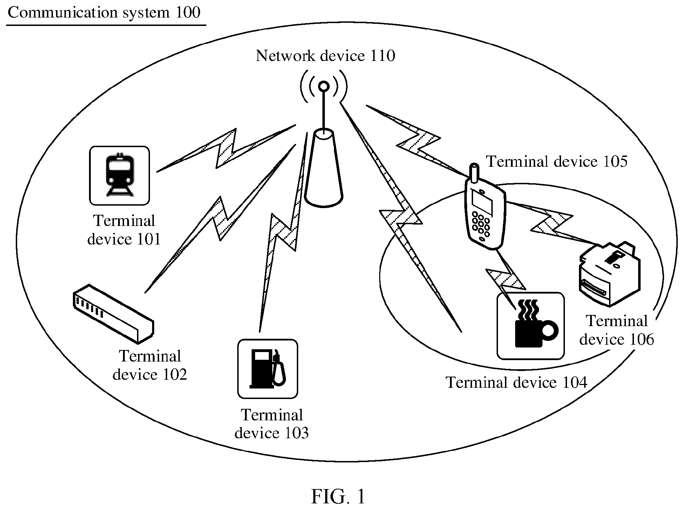

FIG. 1 shows an architecture of a mobile communication system. A communication system 100 may include a network device 110 and terminal devices 101 to 106. It should be understood that the communication system 100 may include more or fewer network devices or terminal devices. The network device or the terminal device may be hardware, may be software obtained through functional division, or may be a combination thereof. In addition, terminal devices 104 to 106 may also form a communication system. For example, a terminal device 105 may send downlink data to the terminal device 104 or the terminal device 106. The network device may communicate with the terminal devices via another device or network element. The network device 110 may send downlink data to the terminal devices 101 to 106, or may receive uplink data sent by the terminal devices 101 to 106. Certainly, the terminal devices 101 to 106 may also send the uplink data to the network device 110, or may receive the downlink data sent by the network device 110.

The network device 110 is a node in a radio access network (radio access network, RAN), and may be referred to as a base station or a RAN node (or device). Currently, the access network device 101 may be, for example, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission reception point (transmission reception point, TRP), a satellite, a drone, or the like. The network device may alternatively be a base station (next generation NodeB, gNB), a TRP, or a TP in a 5G system, or one antenna panel or one group of antenna panels (including a plurality of antenna panels) of a base station in a 5G system. In addition, the network device may alternatively be a network node that forms a gNB or a TP, for example, a BBU or a distributed unit (distributed unit, DU). Alternatively, the network device may be a device that undertakes a network side function and that is in a device-to-device (device-to-device, D2D) communication system, a machine-to-machine (machine to machine, M2M) communication system, an internet of things (Internet of Things, IoT) communication system, an internet of vehicles communication system, or another communication system. The network device 110 may alternatively be a network device in a future possible communication system. A specific technology and a specific device form used by the network device are not limited in embodiments of this application.

The terminal devices 101 to 106 each may also be referred to as user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like, are a device that provides voice or data connectivity for a user, or may be an internet of things device. For example, the terminal devices 101 to 106 include a handheld device, a vehicle-mounted device, and the like that have a wireless communication function. Currently, the terminal devices 101 to 106 each may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electricity meter), a smart robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), flight equipment (for example, an intelligent robot, a hot air balloon, a drone, or an aircraft), or the like. The terminal devices 101 to 106 may alternatively be other devices having a terminal function. For example, the terminal devices 101 to 106 may alternatively be devices that function as terminals in D2D communication.

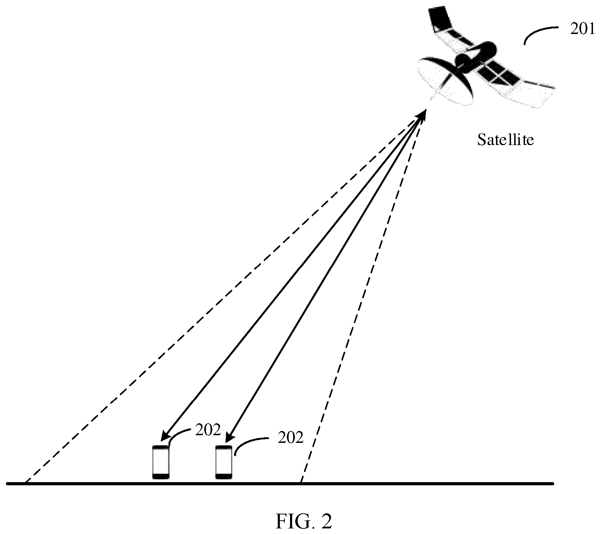

Based on descriptions of the architecture of the terrestrial communication system shown in FIG. 1, an example in which embodiments of this application may be applied to a non-terrestrial network (non-terrestrial network, NTN) communication system is used for description. An NTN includes nodes such as a satellite network, a high-altitude platform station, and a drone. By virtue of the significant advantages such as global coverage, long-distance transmission, flexible networking, easy deployment, and no geographical limitations, the NTN has been widely applied to many fields such as maritime communication, positioning and navigation, disaster relief, scientific experiments, video broadcasting, and earth observation. A terrestrial 5G network and a satellite network are integrated with mutual complementarity, to form a sea-land-air-space-ground integrated communication network with seamless global coverage, so as to meet various ubiquitous service requirements of users. In embodiments of this application, for example, NTN communication is satellite communication, or in other words, the NTN communication system is a satellite system. As shown in FIG. 2, an NTN communication system includes a satellite 201 and terminal devices 202. For explanation of the terminal device 202, refer to related descriptions of the terminal devices 101 to 106. The satellite 201 may also be referred to as a high-altitude platform station, a high-altitude aircraft, or a satellite base station. When the NTN communication system is associated with a terrestrial network communication system, the satellite 201 may be considered as one or more network devices in an architecture of the terrestrial network communication system. The satellite 201 provides a communication service for the terminal device 202, and the satellite 201 may be further connected to a core network device. For a structure and functions of the network device 201, refer to the foregoing descriptions of the network device 201. For a communication manner between the satellite 201 and the terminal devices 202, refer to descriptions in FIG. 1. Details are not described herein again. The solutions in embodiments of this application may also be directly applied to a terrestrial communication network, or may be applied to a terrestrial communication network after being slightly modified in a method that can be figured out by a person skilled in the art. Details are not described herein.

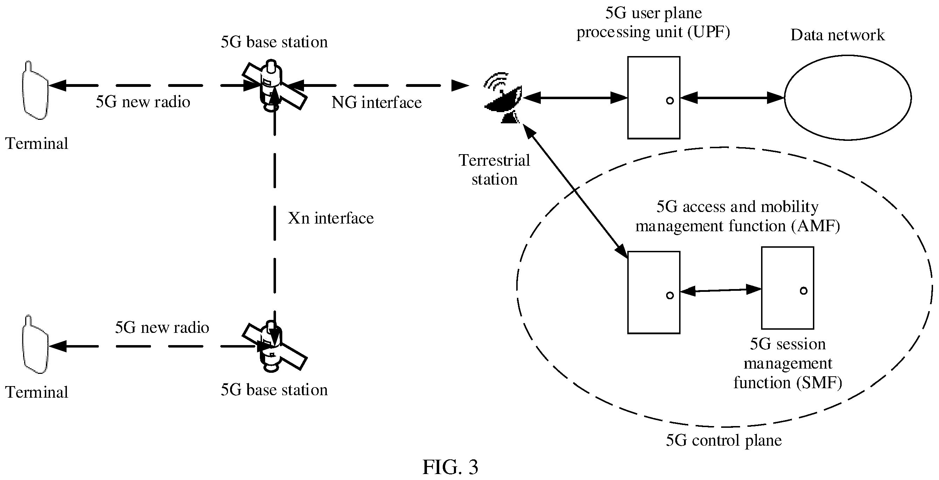

5G is used as an example. An architecture of a 5G satellite communication system is shown in FIG. 3. A terrestrial terminal device accesses a network through 5G new radio, and a 5G base station is deployed on a satellite, and is connected to a terrestrial core network through a radio link. In addition, there is a radio link between satellites, for signaling exchange and user data transmission between base stations. Devices and interfaces in FIG. 3 are described as follows:
A 5G core network provides user access control, mobility management, session management, user security authentication, charging, and other services. The 5G core network includes a plurality of function units that may be classified into a control plane function entity and a data plane function entity. An access and mobility management function (AMF) is responsible for user access management, security authentication, and mobility management. A user plane function (UPF) is responsible for managing user plane data transmission, traffic statistics collection, and other functions.

A terrestrial station is responsible for forwarding signaling and service data between a satellite base station and the 5G core network.

5G new radio is a radio link between a terminal and a base station.

Xn interface is an interface between 5G base stations, mainly for handover and other signaling exchange.

An NG interface is an interface between the 5G base station and the 5G core network, mainly for exchange of NAS signaling of a core network and service data of users.

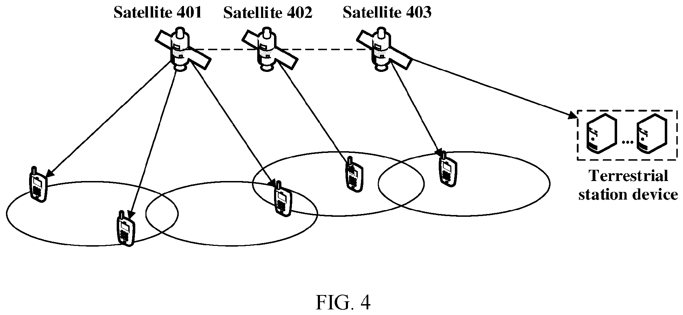

FIG. 4 is a diagram of an architecture of another possible satellite communication system to which this application is applicable. If a satellite communication system is compared with a terrestrial communication system, a satellite may be considered as one or more network devices on the ground, for example, a base station, an access point 1, an access point 2, and an access point 3 to an access point n (not shown in the figure). The satellite provides a communication service for a terminal device, and the satellite may be further connected to a core network device (for example, an access and mobility management function (access and mobility management function, AMF)). The satellite may be a low earth orbit (low earth orbit, LEO) satellite or a non-geostationary earth orbit (non-geostationary earth orbit, NGEO) satellite.

For example, the satellite communication system in FIG. 4 includes a satellite 401, a satellite 402, and a satellite 403. Each satellite may provide a communication service, a navigation service, a positioning service, and the like for the terminal device through a plurality of beams. The satellite in this scenario may be an LEO satellite. The satellite uses a plurality of beams to cover a service area, and different beams may be used to perform communication in one or more modes of the following: time division, frequency division, and space division. The satellite performs wireless communication with the terminal device by broadcasting a communication signal, a navigation signal, and the like. The satellite may perform wireless communication with a terrestrial station device. As shown in FIG. 4, the satellite 403 is connected to the terrestrial station device. The satellite mentioned in this embodiment of this application may be a satellite base station, or may include an orbit receiver or a repeater configured to relay information, or may be a network side device carried on the satellite.

The terrestrial station device may be, for example, a core network (core network, CN) device in an existing mobile communication architecture (for example, a 3GPP access architecture of a 5G network) or a core network device in a future mobile communication architecture. As a bearer network, a core network provides an interface to a data network, provides communication connection, authentication, management, and policy control for user equipment (UE), and bears a data service. The CN may further include an access and mobility management network element (access and mobility management function, AMF), a session management network element (session management function, SMF), an authentication server network element (authentication server function, AUSF), a policy control network element (policy control function, PCF), a user plane function (user plane function, UPF) network element, and the like. The AMF network element is configured to manage access and mobility of UE, mainly responsible for UE authentication, UE mobility management, UE paging, and other functions.

The satellite communication system includes a transparent transmission satellite architecture and a non-transparent transmission satellite architecture. Transparent transmission is also referred to as bent-pipe forwarding transmission, that is, only frequency conversion and signal amplification are performed on a signal on a satellite, and the satellite is transparent to the signal. Non-transparent transmission is also referred to as regenerative (on-satellite access/processing) transmission, that is, a satellite has some or all of functions of a base station. For example, the satellite 401 and the satellite 402 in FIG. 4 are of non-transparent satellite architectures, and the satellite 403 is of a transparent satellite architecture. In addition, the satellite may work in a quasi earth-fixed mode or a satellite-fixed mode.

A network device in the terrestrial communication system and a satellite in the NTN communication system are collectively considered as network devices. An apparatus configured to implement a function of a network device may be a network device, or may be an apparatus that can support a network device in implementing a function of the network device, for example, a chip system, and the apparatus may be mounted in the network device. When the technical solutions provided in embodiments of this application are described below, an example in which an apparatus configured to implement a function of a network device is a satellite is used to describe the technical solutions provided in embodiments of this application. It may be understood that when the methods provided in embodiments of this application are applied to a terrestrial network communication system, an action performed by a satellite may be performed by a base station or a network device.

In embodiments of this application, an apparatus configured to implement a function of a terminal device may be a terminal device, or may be an apparatus that can support a terminal device in implementing a function of the terminal device, for example, a chip system, a hardware circuit, a software module, or a combination of a hardware circuit and a software module, and the apparatus may be mounted in the terminal device or used together with the terminal device. In embodiments of this application, the chip system may include a chip, or may include a chip and another discrete device. In the technical solutions provided in embodiments of this application, descriptions are provided by using an example in which an apparatus configured to implement terminal device functions is a terminal device.

For ease of understanding embodiments of this application, the following describes an application scenario of this application. A service scenario described in embodiments of this application is used to describe the technical solutions in embodiments of this application more clearly, and does not constitute any limitation on the technical solutions provided in embodiments of this application. A person of ordinary skill in the art may be aware that, with emergence of a new service scenario, the technical solutions provided in embodiments of this application are also applicable to similar technical problems.

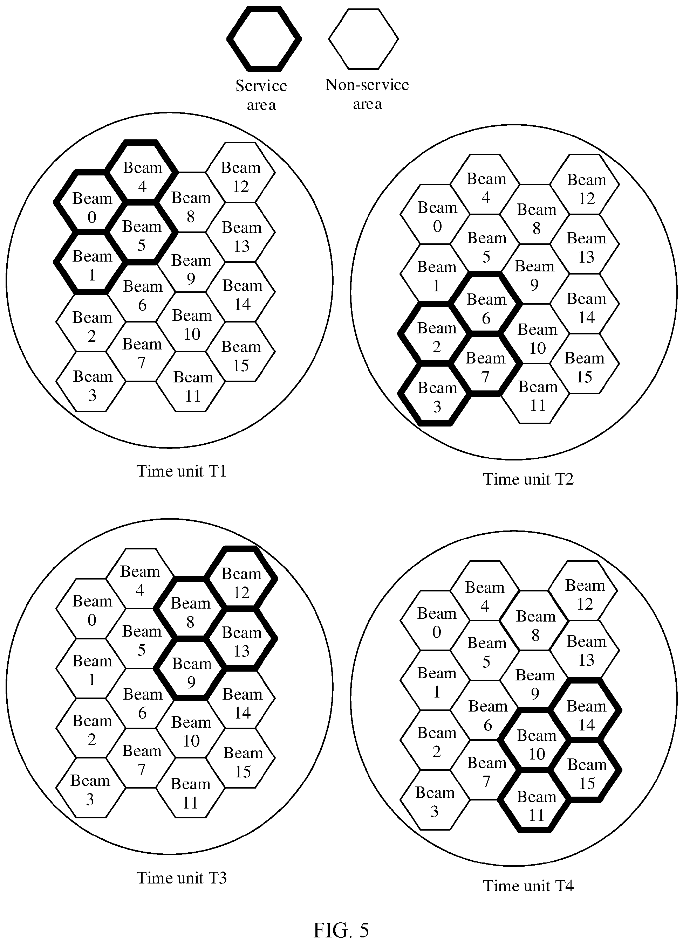

A satellite may cover thousands or even tens of thousands of kilometers, and a beam may cover tens or even thousands of kilometers. To support wide coverage of the satellite, tens of, hundreds of, or even more beams usually need to be configured for the satellite. To alleviate a contradiction between small load and wide coverage of a single satellite, a beam hopping manner may be used for area coverage. To be specific, a satellite may be configured with a large quantity of beams to cover a wide area, but only a small quantity of beams are used in a same time unit for area coverage, and a plurality of beams are used in different time units to cover a wide area. For example, refer to FIG. 5. A satellite is configured with 16 beams to cover a wide area, but only four beams are used in a time unit for area coverage. In a time unit T1, four beams numbered 0, 1, 4, and 5 are used for area coverage. In a time unit T2, four beams numbered 2, 3, 6, and 7 are used for area coverage. The rest may be deduced by analogy. All areas (that is, areas corresponding to the 16 beams) covered by the single satellite are served in T1, T2, T3, and T4 in a time division mode. A time unit may be dozens of milliseconds, several milliseconds, or even a smaller time granularity. In a satellite communication network, a plurality of beams are configured in a satellite, and each of the beams may be considered as a beam in a cell or a separate cell. A satellite beam is a shape with a specific range formed by an electromagnetic wave emitted by a satellite antenna on a surface of the earth, which is similar to a beam of a flashlight. Alternatively, a signal emitted by a satellite is a signal wave emitted in a specific direction instead of 360° radiation.

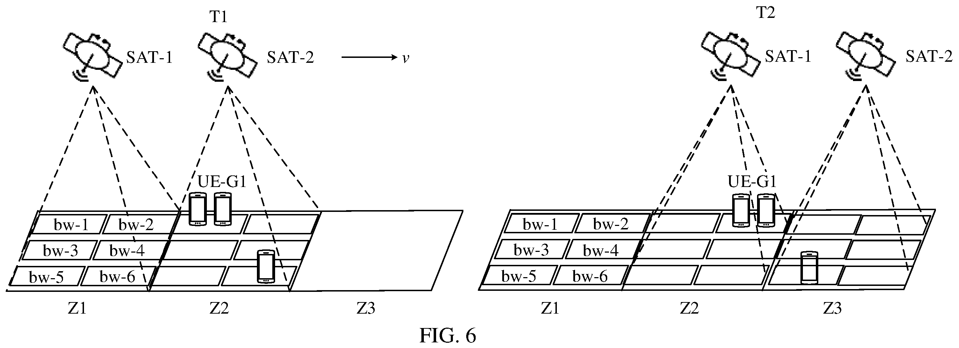

In a beam hopping satellite communication system, movement of a satellite causes group handover of terminal devices in a zone (zone). As shown in FIG. 6, a UE cluster in a single beam position in a zone Z2 is denoted as UE-G1, and the UE-G1 includes a plurality of UEs. At time T1, the UE-G1 is served by one or more beams of a satellite SAT-2. At time T2, a service cannot be provided at the beam position due to movement of the satellite SAT-2, and the UE-G1 is served by one or more beams of a satellite SAT-1. Therefore, the UE-G1 performs group handover. In addition, because the satellite moves at a high speed of about 7.5 km/s, each time of group handover is about several seconds to dozens of seconds. In other words, in the beam hopping satellite system, terminal device group handover triggered by the movement of the satellite is very common. The terminal device group handover may also be described as UE group handover, user group handover, or the like.

Currently, cell handover in a terrestrial network is mainly triggered by movement of a terminal device. Generally, a network device may send measurement configurations corresponding to a serving cell and a neighboring cell to the terminal device, and UE measures cell signal quality based on the measurement configurations, for example, measures reference signal received power (reference signal received power, RSRP) and/or reference signal received quality (reference signal received quality, RSRQ). The terminal device reports a measurement result to the network device, and the network device selects an appropriate neighboring cell based on the received measurement result, and exchanges information such as context information, admission control, and a reserved resource that are related to user handover. Then, the network device sends handover-related control information to the terminal device by using a serving cell, and completes an access procedure in a new cell. If an existing cell handover design is used in the beam hopping satellite system, efficiency and a success rate of group handover caused by the movement of the satellite are low.

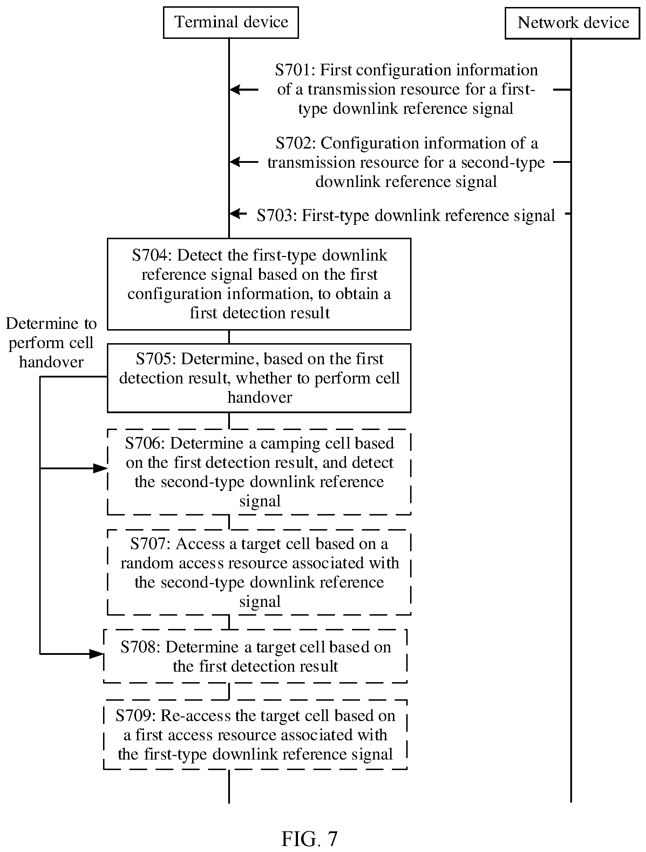

Based on this, embodiments of this application provide a handover method and an apparatus, to design cell handover dedicated to group handover caused by movement of a satellite. The following further describes the handover method in detail with reference to FIG. 7.

FIG. 7 shows a handover method. The handover method includes the following procedures.

S701: A network device sends, to a terminal device, first configuration information of a transmission resource for a first-type downlink reference signal.

The first-type downlink reference signal is used for cell handover. The cell handover includes cell handover of a terminal device in a connected state, or cell reselection of a terminal device in an idle state or an inactive state. It may be understood that the cell reselection herein is a special case of cell handover. Optionally, in a beam hopping satellite system, the first-type downlink reference signal is used for terminal device group handover caused by movement of a satellite.

In a specific implementation, the transmission resource for the first-type downlink reference signal includes one or more of the following: a time domain resource occupied by the first-type downlink reference signal, a transmission periodicity of the first-type downlink reference signal, a sequence corresponding to the first-type downlink reference signal, a polarization manner corresponding to the first-type downlink reference signal, a frequency domain resource corresponding to the first-type downlink reference signal, a beam corresponding to the first-type downlink reference signal, a receive window corresponding to the first-type downlink reference signal, and a neighboring service area of a first satellite at a first moment. There is a mapping relationship between the beam corresponding to the first-type downlink reference signal and the neighboring service area of the first satellite at the first moment. For example, the time domain resource occupied by the first-type downlink reference signal may indicate, by using a bitmap (bitmap), a sending location of the first-type downlink reference signal in time domain. The receive window corresponding to the first-type downlink reference signal may be represented by using a time-frequency resource occupied by the receive window, or may be represented by using an offset between the receive window and a reference receive window. In embodiments of this application, the network device may be the first satellite, or may be a ground device.

The transmission periodicity of the first-type downlink reference signal is related to a movement status of the first satellite. For example, the transmission periodicity of the first-type downlink reference signal may be determined based on a latitude location related to a movement track of the first satellite. For example, different periodicities may be used at a low latitude and a high latitude. The low latitude may indicate a latitude within 50 degrees of a north-south latitude, and the high latitude indicates a latitude above 50 degrees of the north-south latitude. For example, a periodicity corresponding to a low-latitude location is 30s, and a periodicity corresponding to a high-latitude location is 5s.

The neighboring service area of the first satellite at the first moment is an area neighboring to a service area of the first satellite at the first moment. Optionally, the neighboring service area of the first satellite at the first moment may be included in a service area of another satellite at the first moment. Optionally, the neighboring service area of the first satellite at the first moment may be determined based on a movement direction of the first satellite. For example, in FIG. 6, a service area of the satellite SAT-1 at the moment T1 is Z1, and a service area of the satellite SAT-1 at the moment T2 is Z2 based on a movement direction of the SAT-1. In this case, a neighboring service area of the satellite SAT-1 at the moment T1 may include some areas in Z2.

Optionally, the first downlink reference signal may be a synchronization signal block (synchronization signal block, SSB) used for cell handover. To distinguish from an SSB used for random access, in embodiments of this application, the SSB used for cell handover is denoted as an HO-SSB, and the SSB used for random access is denoted as an NR-SSB. Certainly, the two types of SSBs may alternatively be distinguished by using other names. This is not limited in embodiments of this application.

Optionally, the network device may broadcast the first configuration information of the transmission resource for the first-type downlink reference signal via SIBx. For example, the SIBx message may be one or more of messages such as SIB2, SIB3, SIB4, and SIB 19. A broadcast range may include a serving cell and a neighboring cell of the terminal device. Alternatively, the network device may configure the first configuration information of the transmission resource for the first-type downlink reference signal via radio resource control (radio resource control, RRC) signaling. Cells may also exchange configuration information of a related transmission resource with each other through an Xn interface, to avoid confliction and interference of transmission resource usage.

Optionally, the first-type downlink reference signal includes one or more downlink reference signals. Optionally, because handover periods of different terminal devices are different, the plurality of downlink reference signals may occupy different transmission resources in transmission resources for the first-type downlink reference signal.

S702: The network device sends, to the terminal device, configuration information of a transmission resource for a second-type downlink reference signal.

The second-type downlink reference signal may be used for random access, for example, initial random access. In the initial random access, the second-type downlink reference signal is further used for cell search. In addition, the second-type downlink reference signal may be further used in processes such as beam recovery, reestablishment after a radio link failure, and requesting another system message. As described in S701, the second-type downlink reference signal may be an SSB used for random access, and is also referred to as an NR-SSB.

In a specific implementation, the transmission resource for the second-type downlink reference signal includes one or more of the following: a time domain length resource occupied by the second-type downlink reference signal, a transmission periodicity of the second-type downlink reference signal, a sequence corresponding to the second-type downlink reference signal, a polarization manner corresponding to the second-type downlink reference signal, a frequency domain resource corresponding to the second-type downlink reference signal, a beam corresponding to the second-type downlink reference signal, a receive window corresponding to the second-type downlink reference signal, and a service area of the first satellite at the first moment. There is a mapping relationship between the beam corresponding to the second-type downlink reference signal and the service area of the first satellite at the first moment.

Optionally, the network device may broadcast the configuration information of the transmission resource for the second-type downlink reference signal via SIBx. A broadcast range may include the serving cell and the neighboring cell of the terminal device. Cells may also exchange configuration information of a related transmission resource with each other through an Xn interface, to avoid confliction and interference of transmission resource usage.

It may be understood that S701 and S702 may be simultaneously performed; or S701 and S702 may be performed at different time, for example, S701 is performed before S702, or S702 is performed before S701. This is not limited in this embodiment of this application. Optionally, when the network device simultaneously performs S701 and S702, the network device may include, in same signaling/a same message, the first configuration information described in S701 and the configuration information, described in S702, of the transmission resource for the second-type downlink reference signal, and send the signaling/message.

In a specific implementation, the transmission resource for the first-type downlink reference signal and the transmission resource for the second-type downlink reference signal (for example, one or more of corresponding resources such as time domain, frequency domain, polarization domain, space domain, and code domain) are different. This design can avoid a resource conflict between random access and cell handover, and also help the terminal device distinguish between the first-type downlink reference signal and the second-type downlink reference signal.

Optionally, that the transmission resource for the first-type downlink reference signal is different from the transmission resource for the second-type downlink reference signal includes one or more of the following: The time domain resource occupied by the first-type downlink reference signal is different from the time domain resource occupied by the second-type downlink reference signal; the transmission periodicity of the first-type downlink reference signal is different from the transmission periodicity of the second-type downlink reference signal; the sequence corresponding to the first-type downlink reference signal is different from the sequence corresponding to the second-type downlink reference signal; the polarization manner corresponding to the first-type downlink reference signal is different from the polarization manner corresponding to the second-type downlink reference signal; the frequency domain resource occupied by the first-type downlink reference signal is different from the frequency domain resource occupied by the second-type downlink reference signal; the beam corresponding to the first-type downlink reference signal is different from the beam corresponding to the second-type downlink reference signal; the receive window corresponding to the first-type downlink reference signal is different from the receive window corresponding to the second-type downlink reference signal; or the first-type downlink reference signal is used in the neighboring service area of the first satellite at the first moment, and the second-type downlink reference signal is used in the service area of the first satellite at the first moment.

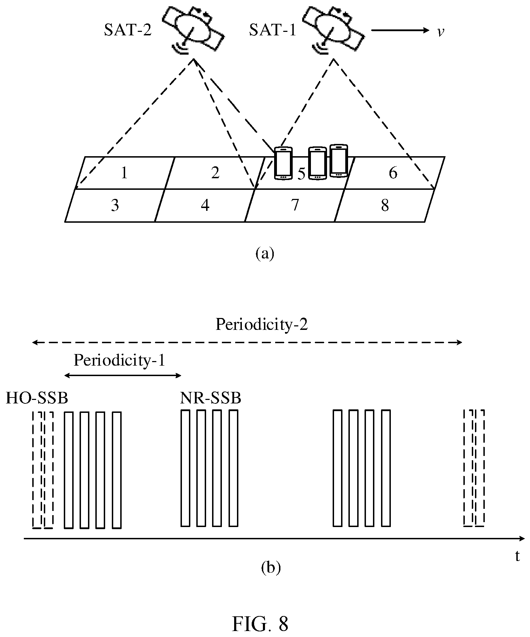

In an example, the first-type downlink reference signal includes one HO-SSB or one type of HO-SSB, and the second-type downlink reference signal includes an NR-SSB. Transmission resources for the HO-SSB and the NR-SSB are different. (a) in FIG. 8 indicates that areas corresponding to the HO-SSB and the NR-SSB are different, the NR-SSB is used for four service areas of a SAT-2 at a moment T1, that is, 1, 2, 3, and 4, and the HO-SSB is used for two neighboring service areas of the SAT-2 at the moment T1, that is, 5 and 7. (b) in FIG. 8 shows that a transmission periodicity of the HO-SSB is different from a transmission periodicity of the NR-SSB. For example, the transmission periodicity of the NR-SSB is denoted as a periodicity (periodicity)-1, and the periodicity-1 may be 20 milliseconds (ms); and the transmission periodicity of the HO-SSB 1 is denoted as a periodicity (periodicity)-2, and the periodicity-2 may be 20 seconds (s). In addition, it may be understood that, in (b) in FIG. 8, two dashed-line boxes indicate that a quantity of neighboring service areas corresponding to the HO-SSB is 2, and four solid-line boxes indicate that a quantity of service areas corresponding to the NR-SSB is 4.

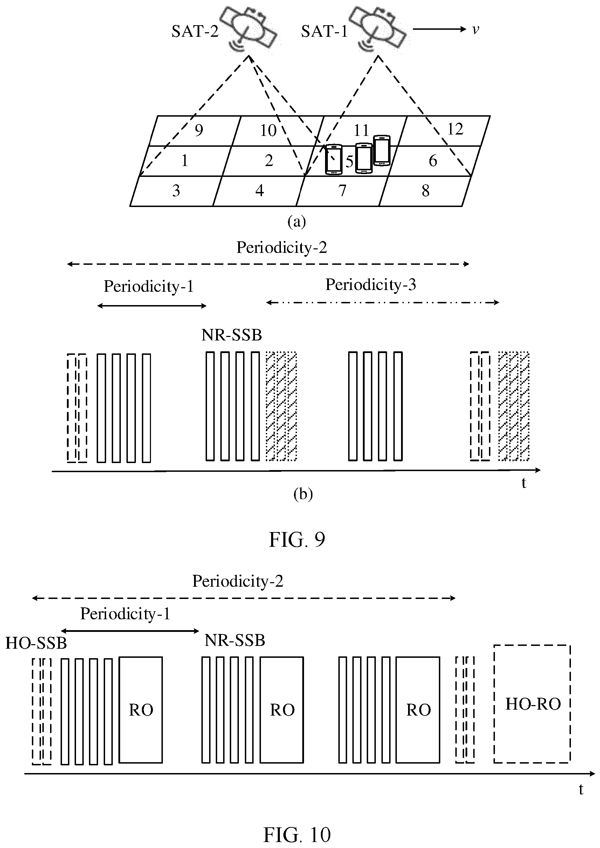

In another example, the first-type downlink reference signal includes a plurality of HO-SSBs or a plurality of types of HO-SSBs, and the second-type downlink reference signal includes an NR-SSB. Transmission resources for different HO-SSBs in the plurality of HO-SSBs are different, and transmission resources for the plurality of HO-SSBs and a transmission resource for the NR-SSB are different. (a) in FIG. 9 shows that the first-type downlink reference signal includes an HO-SSB 1 and an HO-SSB 2. The HO-SSB 1, the HO-SSB 2, and the NR-SSB correspond to different areas. The NR-SSB is used for four service areas of a SAT-2 at a T1 moment: 1, 2, 3, and 4. The HO-SSB 1 is used for two neighboring service areas of the SAT-2 at the T1 moment: 5 and 7. The HO-SSB 1 is used for three neighboring service areas of the SAT-2 at the T1 moment: 9, 10, and 11. (b) in FIG. 9 shows that transmission periodicities of the HO-SSB 1, the HO-SSB 2, and the NR-SSB are different. For example, a transmission periodicity of the NR-SSB is denoted as a periodicity (periodicity)-1, which may be 20 milliseconds (ms); a transmission periodicity of the HO-SSB 1 is denoted as a periodicity (periodicity)-2, which may be 20 seconds (s); and a transmission periodicity of the HO-SSB 2 is denoted as a periodicity (periodicity)-3, which may be 10 seconds (s). In addition, it may be understood that, in (b) in FIG. 9, two dashed-line boxes indicate that a quantity of neighboring service areas corresponding to the HO-SSB 1 is 2, three boxes filled with patterns indicate that a quantity of neighboring service areas corresponding to the HO-SSB 2 is 3, and four solid-line boxes indicate that a quantity of service areas corresponding to the NR-SSB is 4.

In addition, optionally, the network device may further indicate, in the first configuration information, a first access resource associated with the first-type downlink reference signal, where the first access resource is used for cell handover, and indicate, in the configuration information of the transmission resource for the second-type downlink reference signal, a random access resource associated with the second-type downlink reference signal. The first access resource is different from the random access resource. Because movement of a satellite normally causes terminal device group handover, a plurality of terminal devices may periodically need to perform cell handover together. In a possible design, an access occasion (random access channel occasion, RO) in the first access resource may be greater than an access occasion in the random access resource. Corresponding to a case in which the transmission periodicity of the first-type downlink reference signal is greater than the transmission periodicity of the second-type downlink reference signal, a periodicity of the RO in the first access resource is also greater than a periodicity of the RO in the random access resource.

The following describes a configuration of the first access resource in detail by using an example in which the first-type downlink reference signal is an HO-SSB. Because beam hopping handover usually occurs between different satellite nodes, it is usually difficult to maintain time-frequency synchronization between different satellites in real time with fast movement of the satellites and disturbance of a spatial environment. Therefore, the terminal device needs to reinitiate, to a new satellite node in a handover process, a random access procedure applicable to group handover. In addition, there is an obvious difference between a configuration of a random access channel (random access channel, RACH) resource used for group handover and a configuration of an initial random access resource. Specifically, in a beam hopping communication system, group handover is quasi-periodic normal handover (a periodicity is approximately several seconds to hundreds of seconds) triggered by the network device, and the group handover has a high requirement on configuration density of RACH resources. Therefore, a RACH resource for group handover and a RACH resource for random access need to be separately configured. Specific implementation is as follows:
As shown in FIG. 10, the network device indicates two sets of configurations of RACH resources: a regular RO and an HO-RO. The regular RO may be understood as an existing RO for random access. A periodicity of the HO-RO is different from a periodicity of the regular RO. For example, the periodicity of the HO-RO is configured to be several seconds or even hundreds of seconds, and a maximum periodicity of the regular RO is 160 ms. The HO-RO may occupy random preambles (preamble) of all cells in a time division manner, and it is defined in an existing protocol that handover of the regular RO and initial access of the regular RO occupy different preambles. The network device indicates a configuration of a RACH resource of the HO-RO, and the configuration of the RACH resource may be denoted as a handover resource configuration (for example, a ssb-perRACH-OccasionAndCB-PreamblesPerSSB). The handover resource configuration is bound to the HO-SSB. When a plurality of HO-SSBs with different transmission resources are configured, different HO-SSBs may occupy different ROs and preambles, that is, each HO-SSB occupies some ROs and random preambles. Correspondingly, the terminal device may calculate an RO resource based on a UE ID, for example, an identifier i_s of an occupied RO = floor((UEID/N) mod Ns), to avoid a RACH resource collision or an occupation conflict by using the UE ID. N corresponds to a specific frame number, Ns corresponds to a quantity of ROs corresponding to each time period (for example, one frame), floor represents a round-down function, and mod represents a modulo operator or a remainder operator.

S703: The network device sends the first-type downlink reference signal based on the first configuration information.

In a specific implementation, the network device may broadcast the first-type downlink reference signal to the neighboring service area of the first satellite at the first moment. When the terminal device is located in the neighboring service area, the terminal device may detect the first-type downlink reference signal, for example, perform S704.

Correspondingly, the network device may alternatively send the second-type downlink reference signal based on the configuration information of the transmission resource for the second-type downlink reference signal.

For example, the first-type downlink reference signal is an HO-SSB, and the second-type downlink reference signal is an NR-SSB. It may be understood that, when the neighboring service area of the first satellite at the first moment is included in a service area of another satellite at the first moment, the terminal device is located in the neighboring service area, and may obtain the HO-SSB and the NR-SSB. As shown in (a) in FIG. 8, a terminal device in an area 5 may obtain an HO-SSB from the SAT-2 and an NR-SSB from the SAT-2. In an optional implementation, because configurations of transmission resources for the HO-SSB and the NR-SSB are different, the terminal device may determine, based on a configuration of a transmission resource for a detected SSB, that the SSB is the HO-SSB or the NR-SSB. For example, the network device indicates a configuration of a transmission resource for the NR-SSB through SIB information, and configures a transmission resource for the HO-SSB through RRC. When finding that an SSB other than the NR-SSB is received, a terminal device in an idle state determines that the SSB other than the NR-SSB is an HO-SSB, and avoids accessing/reselecting to the HO-SSB. When initially accessing a network, the terminal device in the idle state may select an NR-SSB and a configuration corresponding to the NR-SSB for access. In another optional implementation, the network device may add one bit to the first-type downlink reference signal and the second-type downlink reference signal in an explicit indication manner. When the bit is 0, it indicates the HO-SSB; and when the bit is 1, it indicates the NR-SSB. Alternatively, when the bit is 1, it indicates the HO-SSB; and when the bit is 0, it indicates the NR-SSB. In addition, the NR-SSB may not be changed. When there is an HO-SSB, the network device may add one bit to the HO-SSB, to indicate that an SSB is the HO-SSB.

S704: The terminal device detects the first-type downlink reference signal based on the first configuration information, to obtain a first detection result.

For example, the terminal device may measure one or more of RSRP, RSRQ, interference signal strength, and the like of the detected first-type downlink reference signal, to obtain the first detection result. For example, the RSRP is measured, and the obtained first detection result includes a value of the RSRP, for example, -110 dBm. For another example, the RSRP is measured, and the obtained first detection result includes a level of the RSRP.

Optionally, when the first-type downlink reference signal includes a plurality of HO-SSBs used for different neighboring service areas, the terminal device may obtain location information of a reference point used by the network device to broadcast a satellite beam. For example, the reference point may be located at a central location of the neighboring serving cells. The terminal device selects, based on location information of the terminal device, the location information of the reference point, and ephemeris information, an appropriate HO-SSB from the plurality of HO-SSBs for measurement. For example, the terminal device may select one or more HO-SSBs corresponding to a location of a reference point closest to the terminal device for measurement, and does not need to perform measurement on all the HO-SSBs, so that measurement overheads can be reduced.

Optionally, the terminal device may determine the location information of the terminal device by using a global navigation satellite system (global navigation satellite system, GNSS).

S705: The terminal device determines, based on the first detection result, whether to perform cell handover.

When the first detection result does not meet a requirement, the terminal device may determine not to perform cell handover. When the first detection result does not meet the requirement, the terminal device may determine to perform cell handover. For example, the first detection result includes the value or the level of the measured RSRP of the first-type downlink reference signal. When the value or the level of the RSRP does not meet the requirement, the terminal device may determine not to perform cell handover. When the value or the level of the RSRP meets the requirement, the terminal device may determine not to perform cell handover.

In a specific implementation, when the terminal device determines to perform cell handover, if the terminal device is in a connected state, the terminal device may perform an access procedure after the cell handover; or if the terminal device is in an idle state or an inactive state, the terminal device may perform a cell reselection procedure.

In an example, FIG. 7 shows the cell reselection procedure by using S706 and S707. The procedure is as follows:
S706: The terminal device determines a camping cell based on the first detection result, and detects the second-type downlink reference signal.

It may be understood that the camping cell is a cell on which the terminal device camps, and the terminal device may detect or monitor the second-type downlink reference signal in the camping cell.

Further, when the terminal device has an access requirement, the terminal device may perform S707.

S707: The terminal device accesses a target cell based on the random access resource associated with the second-type downlink reference signal.

For example, the target cell and the camping cell and that is described in S706 may be a same cell.

Similarly, FIG. 7 further shows the access procedure after the cell handover by using S708 and S709. The procedure is as follows:
S708: The terminal device determines a target cell based on the first detection result.
S709: The terminal device re-accesses the target cell based on the first access resource associated with the first-type downlink reference signal. Optionally, non-contention-based access, access-free (RACH-less), contention-based access, or the like may be used in the access procedure. This is not limited in embodiments of this application.

In embodiments of this application, a measurement signal used for cell handover and an access resource associated with cell handover are configured. This can be applicable to a scenario of terminal device group handover caused by movement of a satellite, so that handover efficiency and a handover success rate can be improved, and signaling overheads caused by the group handover can be reduced.

As a satellite moves, a beam gradually shifts, and a mapping relationship between the beam and an area changes. Alternatively, this is described as: refreshing the mapping relationship between the beam and the area. As a result, a service area and a neighboring service area of the satellite change. An embodiment of this application provides a transmission resource update solution, mainly used to update the transmission resource for the first downlink reference signal.

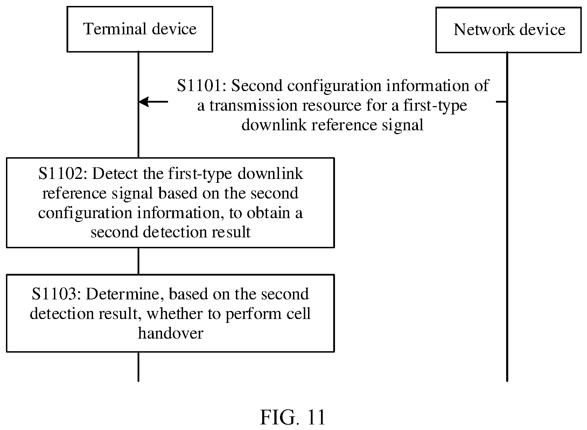

As shown in FIG. 11, the transmission resource update solution may include the following procedure.

S1101: A network device sends, to a terminal device, second configuration information of the transmission resource for the first-type downlink reference signal.

The second configuration information may be understood as an update to the first configuration information. The second configuration information is used to determine a neighboring service area of the first satellite at a second moment.

Optionally, the network device may initiate an update to the first configuration when a mapping relationship between a beam and an area is refreshed. It may be understood that there is an association relationship between the transmission periodicity of the first downlink reference signal (HO-SSB) and a refreshing period of the mapping relationship between the beam and the area. For example, the refreshing period of the mapping relationship between the beam and the area is equal to the transmission periodicity of the first downlink reference signal (HO-SSB), and there is a specific time offset between the refreshing period and a start time point of the first downlink reference signal. The network device may broadcast the refreshing period and the offset to UE, or may exchange the refreshing period and the offset between different nodes in a network, to assist in interference management and the like.

In an optional implementation, movement of the first satellite relates to only refreshing of the mapping relationship between the beam and the area. Remaining transmission resources for the first downlink reference signal are not updated. The second configuration information includes one or more of the following: an offset between the neighboring service area of the first satellite at the second moment and the neighboring service area of the first satellite at the first moment; an offset between a service area of the first satellite at the second moment and the service area of the first satellite at the first moment; an identifier of a first-type area, where the first-type area is included in the neighboring service area of the first satellite at the first moment, and the first-type area is not included in the neighboring service area of the first satellite at the second moment; an identifier of a second-type area, where the second-type area is not included in the neighboring service area of the first satellite at the first moment, and the second-type area is included in the neighboring service area of the first satellite at the second moment; and an offset between the neighboring service area of the first satellite at the second moment and the service area of the first satellite at the second moment.

The terminal device may determine, based on the second configuration information, one or more of the neighboring service area, the service area, and a location relationship between the service area and the neighboring service area of the first satellite at the second moment.

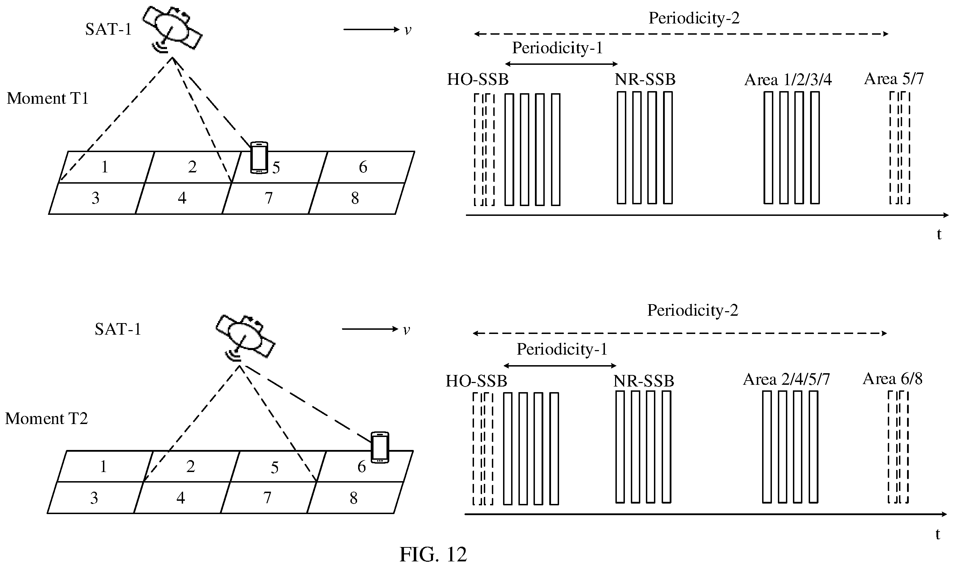

For example, FIG. 12 shows refreshing of a mapping relationship between a beam and an area when a satellite SAT-1 moves from a moment T1 to a moment T2. At the moment T1, service areas of the satellite SAT-1 include 1, 2, 3, and 4, the areas 1, 2, 3, and 4 correspond to beams corresponding to initial access (for example, NR-SSBs), neighboring service areas of the satellite SAT-1 include 5 and 7, the areas 5 and 7 correspond to beams corresponding to handover (for example, HO-SSBs), an NR-SSB corresponds to a periodicity-1, and an HO-SSB corresponds to a periodicity-2. At the moment T2, service areas of the satellite SAT-1 include 2, 4, 5, and 7, the areas 2, 4, 5, and 7 correspond to beams corresponding to initial access (for example, NR-SSBs), neighboring service areas of the satellite SAT-1 include 6 and 8, the areas 6 and 8 correspond to beams corresponding to handover (for example, HO-SSBs), an NR-SSB corresponds to a periodicity-1, and an HO-SSB corresponds to a periodicity-2.

In another optional implementation, the second configuration information may alternatively directly indicate a transmission resource of the first satellite at the second moment. For example, the transmission resource may include a time domain length resource occupied by the first-type downlink reference signal, a transmission periodicity of the first-type downlink reference signal, a sequence corresponding to the first-type downlink reference signal, a polarization manner corresponding to the first-type downlink reference signal, a frequency domain resource corresponding to the first-type downlink reference signal, a beam corresponding to the first-type downlink reference signal, a receive window corresponding to the first-type downlink reference signal, and the neighboring service area of the first satellite at the second moment. In an example, when movement of the first satellite relates to a latitude location change, a transmission periodicity changes, and the transmission periodicity that is of the first-type downlink reference signal and that is indicated by the second configuration information is different from the transmission periodicity that is of the first-type downlink reference signal and that is indicated by the first configuration information.

S1102: The terminal device detects the first-type downlink reference signal based on the second configuration information, to obtain a second detection result.

For implementation of this step, refer to descriptions of S704. Details are not described again in embodiments of this application.

S1103: The terminal device determines, based on the second detection result, whether to perform cell handover.

For implementation of this step, refer to descriptions of S705. Details are not described again in embodiments of this application.

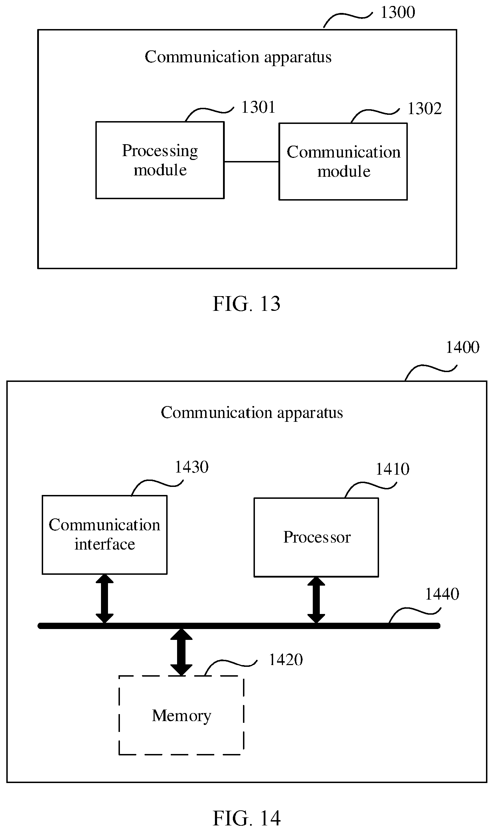

Based on a same idea, an embodiment of this application provides a communication apparatus 1300. Refer to FIG. 13. The communication apparatus 1300 includes a processing module 1301 and a communication module 1302. The communication apparatus 1300 may be a network device, or may be a communication apparatus that is used in a network device or used in cooperation with a network device and that can implement a method performed on a network device side. Alternatively, the communication apparatus 1300 may be a terminal device, or may be a communication apparatus that is used in a terminal device or used in cooperation with a terminal device and that can implement a method performed on a terminal device side.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation on a network device side or a terminal device side in the foregoing methods. A component that is in the communication module and that is configured to implement a receiving function may be considered as a receiving unit, and a component that is in the communication module and that is configured to implement a sending function may be considered as a sending unit, that is, the communication module includes the receiving unit and the sending unit.

When the communication apparatus 1300 is used in a terminal device, the processing module 1301 may be configured to implement a processing function of the terminal device in the example in FIG. 7 or FIG. 11, and the communication module 1302 may be configured to implement a receiving and sending function of the terminal device in the example in FIG. 7 or FIG. 11. Alternatively, the communication apparatus may be understood with reference to descriptions and the possible designs in the third aspect in the summary.

When the communication apparatus 1300 is used in a network device, the processing module 1301 may be configured to implement a processing function of the network device in the example in FIG. 7 or FIG. 11, and the communication module 1302 may be configured to implement a receiving and sending function of the network device in the example in FIG. 7 or FIG. 11. Alternatively, the communication apparatus may be understood with reference to descriptions and the possible designs in the fourth aspect in the summary.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this embodiment of this application is an example, is merely division into logical functions, and may be other division during actual implementation. In addition, functional modules in examples of embodiments of this application may be integrated into one processor, each of the functional modules may exist alone physically, or two or more functional modules may be integrated into one module. The integrated module may be implemented in a form of hardware, or may be implemented in a form of a software functional module.

Based on a same technical idea, an embodiment of this application further provides a power module management apparatus 1400. For example, the power module management apparatus 1400 may be a chip or a chip system. Optionally, in this embodiment of this application, the chip system may include a chip, or may include a chip and another discrete device.

The power module management apparatus 1400 may be configured to implement functions of any network element in the communication system described in the foregoing examples. The power module management apparatus 1400 may include at least one processor 1410. Optionally, the processor 1410 is coupled to a memory; and the memory may be located in the apparatus, the memory may be integrated with the processor, or the memory may be located outside the apparatus. For example, the power module management apparatus 1400 may include at least one memory 1420. The memory 1420 stores a computer program, a computer program or instructions, and/or data that are/is necessary for implementing any one of the foregoing examples. The processor 1410 may execute the computer program stored in the memory 1420, to complete the method in any one of the foregoing examples.

The power module management apparatus 1400 may further include a communication interface 1430. The power module management apparatus 1400 may exchange information with another device by using the communication interface 1430. For example, the communication interface 1430 may be a transceiver, a circuit, a bus, a module, a pin, or another type of communication interface. When the power module management apparatus 1400 is a chip-type apparatus or circuit, the communication interface 1430 in the apparatus 1400 may alternatively be an input/output circuit, and may input information (or referred to as receive information) and output information (or referred to as send information), the processor is an integrated processor, a microprocessor, an integrated circuit, or a logic circuit, and the processor may determine output information based on input information.

Coupling in this embodiment of this application may be indirect coupling or a communication connection between apparatuses, units, or modules, may be in an electrical form, a mechanical form, or another form, and is used for information exchange between the apparatuses, the units, or the modules. The processor 1410 may cooperate with the memory 1420 and the communication interface 1430. A specific connection medium between the processor 1410, the memory 1420, and the communication interface 1430 is not limited in this embodiment of this application.

Refer to FIG. 14. Optionally, the processor 1410, the memory 1420, and the communication interface 1430 are connected to each other through a bus 1440. The bus 1440 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 14, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. Steps of the methods disclosed with reference to embodiments of this application may be directly performed by a hardware processor, or may be performed by using a combination of hardware and a software module in the processor.

In this embodiment of this application, the memory may be a non-volatile memory such as a hard disk drive (hard disk drive, HDD) or a solid-state drive (solid-state drive, SSD), or may be a volatile memory (volatile memory) such as a random access memory (random-access memory, RAM). The memory is any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store program instructions and/or data.

In a possible implementation, the power module management apparatus 1400 may be used in a terminal device. Specifically, the power module management apparatus 1400 may be a terminal device, or may be an apparatus that can support a terminal device in implementing functions of the terminal device in any one of the foregoing examples. The memory 1420 stores a computer program (or instructions) and/or data for implementing functions of the terminal device in any one of the foregoing examples. The processor 1410 may execute the computer program stored in the memory 1420, to complete the method performed by the terminal device in any one of the foregoing examples. When the power module management apparatus 1400 is used in a terminal device, the communication interface in the power module management apparatus 1400 may be configured to: interact with a network device, and send information to the network device or receive information from the network device.

In another possible implementation, the power module management apparatus 1400 may be used in a network device. Specifically, the power module management apparatus 1400 may be a network device, or may be an apparatus that can support a network device in implementing functions of the network device in any one of the foregoing examples. The memory 1420 stores a computer program (or instructions) and/or data for implementing functions of the network device in any one of the foregoing examples. The processor 1410 may execute the computer program stored in the memory 1420, to complete the method performed by the network device in any one of the foregoing examples. When the power module management apparatus 1400 is used in a network device, the communication interface in the power module management apparatus 1400 may be configured to: interact with a terminal device, and send information to the terminal device or receive information from the terminal device.

The power module management apparatus 1400 provided in this example may be used in a terminal device to complete methods performed by the terminal device, or may be used in a network device to complete methods performed by the network device. Therefore, for technical effects that can be achieved by the power module management apparatus 1400, refer to the foregoing method examples. Details are not described herein again.

Based on the foregoing example, an embodiment of this application provides a communication system, including a terminal device and a network device. The terminal device and the network device may implement the method provided in the example shown in FIG. 7 or FIG. 11.

All or some of the technical solutions provided in embodiments of this application may be implemented by using software, hardware, firmware, or any combination thereof. When software is used to implement the foregoing technical solutions, all or some of the foregoing technical solutions may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, a network device, a terminal device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In embodiments of this application, on the premise that there is no logical contradiction, examples may be mutually referenced. For example, methods and/or terms in the method embodiments may be mutually referenced, functions and/or terms in the apparatus embodiments may be mutually referenced, and functions and/or terms between the apparatus examples and the method examples may be mutually referenced.

Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A handover method, comprising:
obtaining first configuration information of a transmission resource for a first-type downlink reference signal;
obtaining configuration information of a transmission resource for a second-type downlink reference signal, wherein
the transmission resource for the first-type downlink reference signal is different from the transmission resource for the second-type downlink reference signal, the first-type downlink reference signal is used for cell handover, and the second-type downlink reference signal is used for random access;
detecting the first-type downlink reference signal based on the first configuration information, to obtain a first detection result; and
determining, based on the first detection result, whether to perform cell handover.

2. The method according to claim 1, wherein that the transmission resource for the first-type downlink reference signal is different from the transmission resource for the second-type downlink reference signal comprises one or more of the following:
a time domain resource occupied by the first-type downlink reference signal is different from a time domain resource occupied by the second-type downlink reference signal;
a transmission periodicity of the first-type downlink reference signal is different from a transmission periodicity of the second-type downlink reference signal;
a sequence corresponding to the first-type downlink reference signal is different from a sequence corresponding to the second-type downlink reference signal;
a polarization manner corresponding to the first-type downlink reference signal is different from a polarization manner corresponding to the second-type downlink reference signal;
a frequency domain resource occupied by the first-type downlink reference signal is different from a frequency domain resource occupied by the second-type downlink reference signal;
a beam corresponding to the first-type downlink reference signal is different from a beam corresponding to the second-type downlink reference signal;
a receive window corresponding to the first-type downlink reference signal is different from a receive window corresponding to the second-type downlink reference signal; or
the first-type downlink reference signal is used in a neighboring service area of a first satellite at a first moment, and the second-type downlink reference signal is used in a service area of the first satellite at the first moment.

3. The method according to claim 1 or 2, wherein the transmission resource for the first-type downlink reference signal comprises one or more of the following: the time domain resource occupied by the first-type downlink reference signal, the transmission periodicity of the first-type downlink reference signal, the sequence corresponding to the first-type downlink reference signal, the polarization manner corresponding to the first-type downlink reference signal, the frequency domain resource corresponding to the first-type downlink reference signal, the beam corresponding to the first-type downlink reference signal, the receive window corresponding to the first-type downlink reference signal, and the neighboring service area of the first satellite at the first moment.

4. The method according to claim 3, wherein the first-type downlink reference signal comprises a plurality of downlink reference signals, and the plurality of downlink reference signals occupy different transmission resources in transmission resources for the first-type downlink reference signal.

5. The method according to claim 3 or 4, wherein the transmission periodicity of the first-type downlink reference signal is related to a movement status of the first satellite.

6. The method according to any one of claims 1 to 5, wherein the method further comprises:
obtaining second configuration information of the transmission resource for the first-type downlink reference signal;
detecting the first-type downlink reference signal based on the second configuration information, to obtain a second detection result; and
determining, based on the second detection result, whether to perform cell handover.

7. The method according to claim 6, wherein the second configuration information is used to determine a neighboring service area of the first satellite at a second moment, and the second configuration information comprises one or more of the following:
an offset between the neighboring service area of the first satellite at the second moment and the neighboring service area of the first satellite at the first moment;
an offset between a service area of the first satellite at the second moment and the service area of the first satellite at the first moment;
an identifier of a first-type area, wherein the first-type area is comprised in the neighboring service area of the first satellite at the first moment, and the first-type area is not comprised in the neighboring service area of the first satellite at the second moment;
an identifier of a second-type area, wherein the second-type area is not comprised in the neighboring service area of the first satellite at the first moment, and the second-type area is comprised in the neighboring service area of the first satellite at the second moment; and
an offset between the neighboring service area of the first satellite at the second moment and the service area of the first satellite at the second moment.

8. The method according to any one of claims 1 to 7, wherein the first-type downlink reference signal is associated with a first access resource of a terminal device in cell handover, and the first access resource is different from a random access resource associated with the second-type downlink reference signal.

9. The method according to any one of claims 1 to 8, wherein after cell handover is determined to be performed, the method further comprises:
determining a camping cell based on the first detection result, and detecting the second-type downlink reference signal; and
accessing a target cell based on the random access resource associated with the second-type downlink reference signal.

10. The method according to any one of claims 1 to 8, wherein after cell handover is determined to be performed, the method further comprises:
determining a target cell based on the first detection result; and
re-accessing the target cell based on the first access resource associated with the first-type downlink reference signal.

11. A handover method, comprising:
determining first configuration information of a transmission resource for a first-type downlink reference signal;
sending the first configuration information of the transmission resource for the first-type downlink reference signal; and
sending configuration information of a transmission resource for a second-type downlink reference signal, wherein
the transmission resource for the first-type downlink reference signal is different from the transmission resource for the second-type downlink reference signal, the first-type downlink reference signal is used for cell handover, and the second-type downlink reference signal is used for random access.

12. The method according to claim 11, wherein the method further comprises:
sending the first-type downlink reference signal based on the first configuration information of the transmission resource for the first-type downlink reference signal.

13. The method according to claim 11 or 12, wherein that the transmission resource for the first-type downlink reference signal is different from the transmission resource for the second-type downlink reference signal comprises one or more of the following:
a time domain resource occupied by the first-type downlink reference signal is different from a time domain resource occupied by the second-type downlink reference signal;
a transmission periodicity of the first-type downlink reference signal is different from a transmission periodicity of the second-type downlink reference signal;
a sequence corresponding to the first-type downlink reference signal is different from a sequence corresponding to the second-type downlink reference signal;
a polarization manner corresponding to the first-type downlink reference signal is different from a polarization manner corresponding to the second-type downlink reference signal;
a frequency domain resource occupied by the first-type downlink reference signal is different from a frequency domain resource occupied by the second-type downlink reference signal;
a beam corresponding to the first-type downlink reference signal is different from a beam corresponding to the second-type downlink reference signal;
a receive window corresponding to the first-type downlink reference signal is different from a receive window corresponding to the second-type downlink reference signal; or
the first-type downlink reference signal is used in a neighboring service area of a first satellite at a first moment, and the second-type downlink reference signal is used in a service area of the first satellite at the first moment.

14. The method according to any one of claims 11 to 13, wherein the transmission resource for the first-type downlink reference signal comprises one or more of the following: the time domain resource occupied by the first-type downlink reference signal, the transmission periodicity of the first-type downlink reference signal, the sequence corresponding to the first-type downlink reference signal, the polarization manner corresponding to the first-type downlink reference signal, the frequency domain resource corresponding to the first-type downlink reference signal, the beam corresponding to the first-type downlink reference signal, the receive window corresponding to the first-type downlink reference signal, and the neighboring service area of the first satellite at the first moment.

15. The method according to claim 14, wherein the first-type downlink reference signal comprises a plurality of downlink reference signals, and the plurality of downlink reference signals occupy different transmission resources in transmission resources for the first-type downlink reference signal.

16. The method according to claim 14 or 15, wherein the transmission periodicity of the first-type downlink reference signal is related to a movement status of the first satellite.

17. The method according to any one of claims 11 to 16, wherein the method further comprises:
sending second configuration information of the transmission resource for the first-type downlink reference signal.

18. The method according to claim17, wherein the second configuration information is used to determine a neighboring service area of the first satellite at a second moment, and the second configuration information comprises one or more of the following:
an offset between the neighboring service area of the first satellite at the second moment and the neighboring service area of the first satellite at the first moment;
an offset between a service area of the first satellite at the second moment and the service area of the first satellite at the first moment;
an identifier of a first-type area, wherein the first-type area is comprised in the neighboring service area of the first satellite at the first moment, and the first-type area is not comprised in the neighboring service area of the first satellite at the second moment;
an identifier of a second-type area, wherein the second-type area is not comprised in the neighboring service area of the first satellite at the first moment, and the second-type area is comprised in the neighboring service area of the first satellite at the second moment; and
an offset between the neighboring service area of the first satellite at the second moment and the service area of the first satellite at the second moment.

19. The method according to any one of claims 11 to 18, wherein the first-type downlink reference signal is associated with a first access resource of a terminal device in cell handover, and the first access resource is different from a random access resource associated with the second-type downlink reference signal.

20. A communication apparatus, comprising a communication module and a processing module, wherein
the communication module is configured to: obtain first configuration information of a transmission resource for a first-type downlink reference signal, and obtain configuration information of a transmission resource for a second-type downlink reference signal, wherein the transmission resource for the first-type downlink reference signal is different from the transmission resource for the second-type downlink reference signal, the first-type downlink reference signal is used for cell handover, and the second-type downlink reference signal is used for random access; and
the processing module is configured to: detect the first-type downlink reference signal based on the first configuration information to obtain a first detection result, and determine, based on the first detection result, whether to perform cell handover.

21. The apparatus according to claim 20, wherein that the transmission resource for the first-type downlink reference signal is different from the transmission resource for the second-type downlink reference signal comprises one or more of the following:
a time domain resource occupied by the first-type downlink reference signal is different from a time domain resource occupied by the second-type downlink reference signal;
a transmission periodicity of the first-type downlink reference signal is different from a transmission periodicity of the second-type downlink reference signal;
a sequence corresponding to the first-type downlink reference signal is different from a sequence corresponding to the second-type downlink reference signal;
a polarization manner corresponding to the first-type downlink reference signal is different from a polarization manner corresponding to the second-type downlink reference signal;
a frequency domain resource occupied by the first-type downlink reference signal is different from a frequency domain resource occupied by the second-type downlink reference signal;
a beam corresponding to the first-type downlink reference signal is different from a beam corresponding to the second-type downlink reference signal;
a receive window corresponding to the first-type downlink reference signal is different from a receive window corresponding to the second-type downlink reference signal; or
the first-type downlink reference signal is used in a neighboring service area of a first satellite at a first moment, and the second-type downlink reference signal is used in a service area of the first satellite at the first moment.

22. The apparatus according to claim 20 or 21, wherein the transmission resource for the first-type downlink reference signal comprises one or more of the following: the time domain resource occupied by the first-type downlink reference signal, the transmission periodicity of the first-type downlink reference signal, the sequence corresponding to the first-type downlink reference signal, the polarization manner corresponding to the first-type downlink reference signal, the frequency domain resource corresponding to the first-type downlink reference signal, the beam corresponding to the first-type downlink reference signal, the receive window corresponding to the first-type downlink reference signal, and the neighboring service area of the first satellite at the first moment.

23. The apparatus according to claim 22, wherein the first-type downlink reference signal comprises a plurality of downlink reference signals, and the plurality of downlink reference signals occupy different transmission resources in transmission resources for the first-type downlink reference signal.

24. The apparatus according to claim 22 or 23, wherein the transmission periodicity of the first-type downlink reference signal is related to a movement status of the first satellite.

25. The apparatus according to any one of claims 20 to 24, wherein
the communication module is further configured to obtain second configuration information of the transmission resource for the first-type downlink reference signal; and
the processing module is further configured to: detect the first-type downlink reference signal based on the second configuration information to obtain a second detection result, and determine, based on the second detection result, whether to perform cell handover.

26. The apparatus according to claim 25, wherein the second configuration information is used to determine a neighboring service area of the first satellite at a second moment, and the second configuration information comprises one or more of the following:
an offset between the neighboring service area of the first satellite at the second moment and the neighboring service area of the first satellite at the first moment;
an offset between a service area of the first satellite at the second moment and the service area of the first satellite at the first moment;
an identifier of a first-type area, wherein the first-type area is comprised in the neighboring service area of the first satellite at the first moment, and the first-type area is not comprised in the neighboring service area of the first satellite at the second moment;
an identifier of a second-type area, wherein the second-type area is not comprised in the neighboring service area of the first satellite at the first moment, and the second-type area is comprised in the neighboring service area of the first satellite at the second moment; and
an offset between the neighboring service area of the first satellite at the second moment and the service area of the first satellite at the second moment.

27. The apparatus according to any one of claims 20 to 26, wherein the first-type downlink reference signal is associated with a first access resource of a terminal device in cell handover, and the first access resource is different from a random access resource associated with the second-type downlink reference signal.

28. The apparatus according to any one of claims 20 to 27, wherein the processing module is further configured to:
after determining to perform cell handover, determine a camping cell based on the first detection result, and detect the second-type downlink reference signal; and
access a target cell based on the random access resource associated with the second-type downlink reference signal.

29. The apparatus according to any one of claims 20 to 27, wherein the processing module is further configured to:
after determining to perform cell handover, determine a target cell based on the first detection result; and
re-access the target cell based on the first access resource associated with the first-type downlink reference signal.

30. A handover apparatus, comprising a processing module and a communication module, wherein
the processing module is configured to determine first configuration information of a transmission resource for a first-type downlink reference signal; and
the communication module is configured to: send the first configuration information of the transmission resource for the first-type downlink reference signal, and send configuration information of a transmission resource for a second-type downlink reference signal, wherein the transmission resource for the first-type downlink reference signal is different from the transmission resource for the second-type downlink reference signal, the first-type downlink reference signal is used for cell handover, and the second-type downlink reference signal is used for random access.

31. The apparatus according to claim 30, wherein the processing module is further configured to send the first-type downlink reference signal based on the first configuration information of the transmission resource for the first-type downlink reference signal.

32. The apparatus according to claim 30 or 31, wherein that the transmission resource for the first-type downlink reference signal is different from the transmission resource for the second-type downlink reference signal comprises one or more of the following:
a time domain resource occupied by the first-type downlink reference signal is different from a time domain resource occupied by the second-type downlink reference signal;
a transmission periodicity of the first-type downlink reference signal is different from a transmission periodicity of the second-type downlink reference signal;
a sequence corresponding to the first-type downlink reference signal is different from a sequence corresponding to the second-type downlink reference signal;
a polarization manner corresponding to the first-type downlink reference signal is different from a polarization manner corresponding to the second-type downlink reference signal;
a frequency domain resource occupied by the first-type downlink reference signal is different from a frequency domain resource occupied by the second-type downlink reference signal;
a beam corresponding to the first-type downlink reference signal is different from a beam corresponding to the second-type downlink reference signal;
a receive window corresponding to the first-type downlink reference signal is different from a receive window corresponding to the second-type downlink reference signal; or
the first-type downlink reference signal is used in a neighboring service area of a first satellite at a first moment, and the second-type downlink reference signal is used in a service area of the first satellite at the first moment.

33. The apparatus according to any one of claims 30 to 32, wherein the transmission resource for the first-type downlink reference signal comprises one or more of the following: the time domain resource occupied by the first-type downlink reference signal, the transmission periodicity of the first-type downlink reference signal, the sequence corresponding to the first-type downlink reference signal, the polarization manner corresponding to the first-type downlink reference signal, the frequency domain resource corresponding to the first-type downlink reference signal, the beam corresponding to the first-type downlink reference signal, the receive window corresponding to the first-type downlink reference signal, and the neighboring service area of the first satellite at the first moment.

34. The apparatus according to claim 33, wherein the first-type downlink reference signal comprises a plurality of downlink reference signals, and the plurality of downlink reference signals occupy different transmission resources in transmission resources for the first-type downlink reference signal.

35. The apparatus according to claim 33 or 34, wherein the transmission periodicity of the first-type downlink reference signal is related to a movement status of the first satellite.

36. The apparatus according to any one of claims 30 to 35, wherein the communication module is further configured to send second configuration information of the transmission resource for the first-type downlink reference signal.

37. The apparatus according to claim 36, wherein the second configuration information is used to determine a neighboring service area of the first satellite at a second moment, and the second configuration information comprises one or more of the following:
an offset between the neighboring service area of the first satellite at the second moment and the neighboring service area of the first satellite at the first moment;
an offset between a service area of the first satellite at the second moment and the service area of the first satellite at the first moment;
an identifier of a first-type area, wherein the first-type area is comprised in the neighboring service area of the first satellite at the first moment, and the first-type area is not comprised in the neighboring service area of the first satellite at the second moment;
an identifier of a second-type area, wherein the second-type area is not comprised in the neighboring service area of the first satellite at the first moment, and the second-type area is comprised in the neighboring service area of the first satellite at the second moment; and
an offset between the neighboring service area of the first satellite at the second moment and the service area of the first satellite at the second moment.

38. The apparatus according to any one of claims 30 to 37, wherein the first-type downlink reference signal is associated with a first access resource of a terminal device in cell handover, and the first access resource is different from a random access resource associated with the second-type downlink reference signal.

39. A communication apparatus, comprising:
a processor, wherein the processor is coupled to a memory, and the processor is configured to invoke computer program instructions stored in the memory, to perform the method according to any one of claims 1 to 10.

40. A communication apparatus, comprising:
a processor, wherein the processor is coupled to a memory, and the processor is configured to invoke computer program instructions stored in the memory, to perform the method according to any one of claims 11 to 19.

41. A communication system, comprising the communication apparatus according to any one of claims 20 to 29 and claim 39, and the communication apparatus according to any one of claims 30 to 38 and claim 40.

42. A computer-readable storage medium, wherein the computer-readable storage medium stores instructions, and when the instructions are run on a computer, the computer is enabled to perform the method according to any one of claims 1 to 10 or the method according to any one of claims 11 to 19.

43. A computer program product, comprising instructions, wherein when the instructions are run on a computer, the computer is enabled to perform the method according to any one of claims 1 to 10 or the method according to any one of claims 11 to 19.
